# EUROPÄISCHE PATENTSCHRIFT

(11) **EP 3 857 082 B1**
(45) Veröffentlichungstag und Bekanntmachung des Hinweises auf die Patenterteilung: **23.03.2022**
(21) Anmeldenummer: 19773406.4
(22) Anmeldetag: 19.09.2019
(51) Int. Cl.: F16C 19/52, F16C 33/34, F16C 41/00

(54) **WÄLZKÖRPER MIT INTEGRIERTER ELEKTRONIK ZUR VERWENDUNG IN EINEM WÄLZLAGER**
ROLLING BODY WITH INTEGRATED ELECTRONICS FOR USE IN A ROLLER BEARINGS
ROULEAUX AVEC ÉLECTRONIQUE INTÉGRÉE DESTINÉS À ÊTRE UTILISÉS DANS DES PALIERS À ROULEMENT

(30) Priorität: 24.09.2018 DE 102018216252
(43) Veröffentlichungstag der Anmeldung: 04.08.2021
(73) Patentinhaber: thyssenkrupp rothe erde Germany GmbH, 44137 Dortmund (DE); thyssenkrupp AG, 45143 Essen (DE)
(72) Erfinder: ELFERT, Gunther, 59597 Erwitte (DE); LÜNEBURG, Bernd, 45481 Mülheim (DE); ROLLMANN, Jörg, 59558 Lippstadt (DE); REIMANN, Manfred, 33758 Schloß Holte-Stukenbrock (DE)
(74) Vertreter: thyssenkrupp Intellectual Property GmbH
(86) Internationale Anmeldenummer: PCT/EP2019/075195
(87) Internationale Veröffentlichungsnummer: WO 2020/064507

(56) Entgegenhaltungen:
- EP-A1- 0 637 734
- WO-A1-2007/067045
- WO-A1-2017/020080
- DE-A1-102010 038 393
- US-A1- 2014 157 880

## Beschreibung

### Stand der Technik

In Großwälzlagern, wie sie beispielsweise in Windkraftanlagen zum Einsatz kommen, wirken während des Betriebs erhebliche Kräfte. Das Zusammenspiel dieser Kräfte ist durchaus komplex und hat erheblichen Einfluss auf die Lebensdauer des Wälzlagers. Daher ist es wünschenswert, Elektronik in Wälzkörper einbringen zu können, um beispielsweise Belastungsmessungen durchführen zu können.

Bei umfangreicheren elektronischen Schaltungen ist es üblich, dass diese auf Platinen angeordnet werden. Um beispielsweise durch Belastungen eines Wälzkörpers hervorgerufene Verformungen des Wälzkörpers zu messen, bietet es sich an, eine Platine mit einer entsprechenden Messtechnik im Inneren des Wälzkörpers anzuordnen. Dazu wäre eine Bohrung durch den Wälzkörper möglich, in welcher die Platine angeordnet werden könnte.

Die naheliegende Fixierung der Platine an den Bohrungswänden erweist sich jedoch als nachteilig. Verformungen des Wälzkörpers übertragen sich so auf die Platine, was zu einer deutlich verkürzten Lebensdauer führt.

Aus WO 2007/067045 A1 ist eine gattungsgemäße Vorrichtung zur Bestimmung der Verformung einer Lagerrolle mit zwei im Wesentlichen parallelen, in einer Bohrung der Lagerrolle angeordneten Leiterplatten bekannt, die von Endeinheiten beabstandet zueinander gehalten werden. Die Endeinheiten sind in Endabschnitte der Bohrung eingepasst. Die Innenseite der Leiterplatten ist jeweils mit einer flächigen Elektrode ausgestattet, die zusammen einen Kondensator bilden. Auf der gegenüberliegenden Außenseite sind die Leiterplatten mit einem Nocken ausgebildet, der unter Vorspannung der Leiterplatte in Gleitkontakt mit der Bohrungswandung steht und dadurch Verformungen durch Stauchung und Ausweitung der Bohrung feststellen kann. US 2014/0157880 A1 beschreibt eine Zustandserkennungsvorrichtung für eine Lagerrolle mit einem Dehnungsmessstreifen, der den physikalischen Zustand einer Kegelrolle bestimmt und einer Verarbeitungseinheit zur Verarbeitung der Messsignale. Dehnungsmessstreifen und Verarbeitungseinheit sind in einer Durchgangsbohrung im Achszentrum der Kegelrolle angeordnet, die mit einer gummielastischen Masse gefüllt ist.

### Offenbarung der Erfindung

Es ist also eine Aufgabe der vorliegenden Erfindung, einen Wälzkörper, ein Wälzlager und ein Verfahren zur Herstellung eines Wälzkörpers zur Verfügung zu stellen, welche die Möglichkeit bieten, Elektronik mit einer erhöhten Lebensdauer im Inneren des Wälzkörpers einfach zu montieren.

Gelöst wird diese Aufgabe mit einem Wälzkörper zur Verwendung in einem Wälzlager, mit einem Außenmantel, einer ersten Stirnseite, einer zweiten Stirnseite und einer Bohrung, wobei die Bohrung entlang einer Mittelachse des Wälzkörpers vorgesehen ist, wobei der Wälzkörper eine in der Bohrung im Wesentlichen parallel zu der Mittelachse des Wälzkörpers angeordnete Platine aufweist, wobei die Bohrung an der erste Stirnseite mit einem Verschluss verschlossen ist, dadurch gekennzeichnet, dass die Platine von dem Verschluss fixiert ist. Damit ist es vorteilhaft möglich, dass die Platine bei Belastungen des Wälzkörpers nicht durch Verformungen des Wälzkörpers gestaucht wird. Weiterhin ist durch ein Fixieren am Verschluss der Bohrung an der ersten Stirnseite eine einfache Montage der Platine möglich, was Kosten und Zeit während der Herstellung des Wälzkörpers spart. Denkbar ist, dass die Bohrung eine Durchgangsbohrung ist. Denkbar ist zudem, dass die Bohrung durch den Verschluss an der ersten Stirnseite zumindest teilweise, vorzugsweise jedoch vollständig verschlossen ist. Dadurch ist gewährleistet, dass keine Substanzen, wie beispielsweise Schmiermittel, an der ersten Stirnseite in die Bohrung eindringen können. Vorzugsweise schließt der Verschluss bündig mit der ersten Stirnseite ab, wodurch der erfindungsgemäße Wälzkörper an der ersten Stirnseite die gleiche räumliche Form aufweist wie herkömmliche Wälzkörper. Vorzugsweise ist der Außenmantel des Wälzkörpers wenigstens teilweise als Laufläche vorgesehen, auf der Lagerringe, insbesondere ein Außenring und ein Innenring, des Wälzlagers abrollen. Dabei ist vorzugsweise einer der Lagerringe drehfest vorgesehen, beispielsweise der Außenring, während der andere Lagerring konzentrisch dazu und drehbar vorgesehen ist. Vorzugsweise ist der Wälzkörper zylinderförmig, tonnenförmig, toroidal und/oder kegelförmig ausgebildet. In diesem Fall weist der Wälzkörper eine Haupterstreckungsrichtung auf, wobei die Mittelachse parallel zu der Haupterstreckungsrichtung angeordnet ist. Besonders bevorzugt ist der Wälzkörper im Wesentlichen rotationssymmetrisch um die Mittelachse vorgesehen, insbesondere in dem Bereich zwischen der Bohrungswandung und dem Außenmantel. Der Außenmantel entspricht insbesondere einer äußeren Mantelfläche des Wälzkörpers.

Dass die Bohrung entlang einer Mittelachse des Wälzkörpers vorgesehen ist, bedeutet im Sinne der vorliegenden Erfindung, dass eine Mittelachse der Bohrung im Wesentlichen parallel zu der Mittelachse des Wälzkörpers angeordnet ist. Dies umfasst zum einen eine Anordnung der Bohrung mit einem Versatz zwischen der Mittelachse der Bohrung und der Mittelachse des Wälzkörpers und zum andere eine Anordnung der Bohrung, wobei die Mittelachse der Bohrung der Mittelachse des Wälzkörpers entspricht.

Vorteilhafte Ausgestaltungen und Weiterbildungen der Erfindung können den Unteransprüchen, sowie der Beschreibung unter Bezugnahme auf die Zeichnungen entnommen werden.

Gemäß einer bevorzugten Ausführungsform der vorliegenden Erfindung ist vorgesehen, dass die Platine zur Bohrungswand beabstandet ist. Beabstandet bedeutet im Sinne der vorliegenden Erfindung, dass die Platine in keinem direkten mechanischen Kontakt zur Bohrungswand steht. Dies verringert die mechanische Belastung der Platine deutlich. Mechanische Ermüdungserscheinungen und Defekte der Platine und der auf der Platine angeordneten elektronischen Bauteile werden so reduziert.

Gemäß einer weiteren bevorzugten Ausführungsform der vorliegenden Erfindung ist vorgesehen, dass die Bohrung an der zweiten Stirnseite mit einem zweiten Verschluss verschlossen ist, wobei vorzugsweise die Platine von dem zweiten Verschluss fixiert ist. Dies ermöglicht das Verschließen der Bohrung, welche als Durchgangsbohrung ausgeführt ist, und das gleichzeitige Fixieren der Platine an zwei Punkten. Damit sind eine noch einfachere Montage und eine noch stabilere Fixierung der Platine möglich. Denkbar ist, dass die Bohrung durch den zweiten Verschluss an der zweiten Stirnseite zumindest teilweise, vorzugsweise jedoch vollständig verschlossen ist. Dadurch ist gewährleistet, dass keine Substanzen, wie beispielsweise Schmiermittel, an der zweiten Stirnseite in die Bohrung eindringen können. Vorzugsweise schließt der zweite Verschluss bündig mit der zweiten Stirnseite ab, wodurch der erfindungsgemäße Wälzkörper an der zweiten Stirnseite die gleiche räumliche Form aufweist wie herkömmliche Wälzkörper.

Gemäß einer weiteren bevorzugten Ausführungsform der vorliegenden Erfindung ist vorgesehen, dass der Verschluss ein Epoxidharzpfropfen ist. Dies ermöglicht ein vorteilhaft einfaches Herstellen des Verschlusses und der Fixierung der Platine. Denkbar ist, dass die Platine zumindest teilweise im Bereich der ersten Stirnseite des Wälzkörpers von dem Epoxidpfropfen umgeben ist. Denkbar dazu ist, dass die Platine an dieser Stelle in den Epoxidharzpfropfen eingegossen ist.

Gemäß einer weiteren bevorzugten Ausführungsform der vorliegenden Erfindung ist vorgesehen, dass zwischen dem Verschluss und der Platine eine Schutzschicht angeordnet ist, wobei die Schutzschicht vorzugsweise aus Silikon besteht. Dies schützt die Platine vor chemischen Einflüssen durch den Epoxidharzpfropfen. Zudem ist denkbar, dass die Schutzschicht so konfiguriert ist, dass diese mechanische Einflüsse, wie beispielsweise Schwingungen, dämpfen kann.

Gemäß einer weiteren bevorzugten Ausführungsform der vorliegenden Erfindung ist vorgesehen, dass der zweite Verschluss ein zweiter Epoxidharzpfropfen ist wobei vorzugsweise zwischen dem zweiten Epoxidharzpfropfen und der Platine eine zweite Schutzschicht angeordnet ist, wobei besonders bevorzugt die zweite Schutzschicht aus Silikon besteht. Hierdurch wird eine noch einfachere Herstellung ermöglicht, wobei die Platine stabil an zwei Punkten fixiert und gegen chemische Einflüsse geschützt ist. Denkbar ist, dass die zweite Schutzschicht so konfiguriert ist, dass diese mechanische Einflüsse, wie beispielsweise Schwingungen, dämpfen kann.

Gemäß der vorliegenden Erfindung ist vorgesehen, dass der Wälzkörper einen in der Bohrung angeordneten Messkontakt aufweist, wobei der Messkontakt an der Bohrungswand angeordnet ist, wobei der Messkontakt mit einem Magneten magnetisch an der Bohrungswand fixiert ist. Damit ist vorteilhaft möglich, Daten aufzunehmen, welche direkt an der Bohrungswand abgegriffen werden. Die Fixierung des Messkontaktes an der Bohrungswand mittels des Magneten ist einfach, günstig und sehr zuverlässig. Zur Fixierung des Messkontaktes müssen keine Änderungen an der Bohrungswand durchgeführt werden. Denkbar ist, dass die der Bohrungswand zugewandte Seite des Messkontaktes der Form der Bohrungswand angepasst ist. Denkbar ist zudem, dass die der Platine zugewandte Seite des Messkontaktes im Wesentlichen flach und parallel zur Haupterstreckungsebene der Platine angeordnet ist. Vorstellbar ist, dass die Platine konfiguriert ist, mit dem Messkontakt zu interagieren und aus der Interaktion Messdaten zu gewinnen. Dazu ist vorstellbar, dass die Platine ein Mittel zum induzieren von Wirbelströmen in dem Messkontakt aufweist.

Gemäß einer weiteren bevorzugten Ausführungsform der vorliegenden Erfindung ist vorgesehen, dass der Wälzkörper einen an der Platine angeordneten Abstandshalter aufweist, wobei die Bohrung von der Platine in einen ersten Halbraum und einen zweiten Halbraum geteilt ist, wobei der Messkontakt im ersten Halbraum angeordnet ist, wobei der Abstandshalter im zweiten Halbraum angeordnet ist, wobei der Abstandshalter auf einer dem Messkontakt gegenüberliegenden Position der Platine angeordnet ist, wobei der Abstandshalter mit seiner der Platine abgewandten Seite an der Bohrungswand angeordnet ist, wobei der Abstandshalter an der Platine fixiert ist, wobei der Abstandshalter vorzugsweise mit der Platine verklebt und/oder verschraubt und/oder verklipst ist. Im Sinne der vorliegenden Erfindung müssen der erste Halbraum und der zweite Halbraum nicht gleich groß sein. Der erste Halbraum und der zweite Halbraum können auch unterschiedliche Volumina aufweisen, was insbesondere bedeutet, dass die Platine nicht mittig in der Bohrung angeordnet sein muss. Damit ist vorteilhaft möglich, Bewegungen von der Bohrungswand indirekt über den Abstandshalter auf die Platine zu übertragen. Denkbar ist, dass die der Bohrungswand zugewandte Seite des Abstandshalters der Form der Bohrungswand angepasst ist. Vorstellbar ist, dass die Platine konfiguriert ist, über den Abstandshalter Daten von der Bohrungswand, wie beispielsweise die Temperatur der Bohrungswand, abzugreifen.

Vorzugsweise ist dazu vorgesehen, dass der Abstandshalter mit einem weiteren Magneten magnetisch an der Bohrungswand fixiert ist. Die Fixierung der Platine an der Bohrungswand mittels des weiteren Magneten ist einfach, günstig und sehr zuverlässig. Zur Fixierung der Platine müssen keine Änderungen an der Bohrungswand durchgeführt werden. Denkbar ist ferner, dass der Magnet im Messkontakt und der weitere Magnet im Abstandshalter derart magnetisch interagieren, dass sie sich gegenseitig anziehen. Dies ermöglicht, dass der Messkontakt an der Platine fixiert ist, wenn sich die Platine nicht in einem Wälzkörper befindet. Denkbar ist, dass der Abstand zwischen dem Magneten und dem weiteren Magneten größer ist als der Abstand zwischen dem Magneten und der Bohrungswand und auch größer ist als der Abstand zwischen dem weiteren Magneten und der Bohrungswand. Daraus ergibt sich der Vorteil, dass, wenn die Platine in den Wälzkörper verbracht wird, eine ferromagnetische Wechselwirkung des Magneten mit der Bohrungswand eine Anziehung des Messkontaktes an die Bohrungswand bewirkt und eine weitere ferromagnetische Wechselwirkung des weiteren Magneten mit der Bohrungswand eine Anziehung des Abstandshalters an die Bohrungswand bewirkt, was zu einer Trennung von Messkontakt und Platine führt.

Gemäß einer weiteren bevorzugten Ausführungsform der vorliegenden Erfindung ist vorgesehen, dass der Messkontakt zur Platine beabstandet ist. Dies ermöglicht auf vorteilhafte Weise eine mechanische Entkopplung des Messkontaktes von der Platine und damit eine Entkopplung der Platine von der Bohrungswand. Dies ermöglicht beispielsweise eine induktive Messung des Abstandes zwischen der Platine und dem Messkontakt und damit eine Messung von Verformungen des Wälzkörpers.

Gemäß einer weiteren bevorzugten Ausführungsform der vorliegenden Erfindung ist vorgesehen, dass die Platine Eingriffe zur Aufnahme von Führungshilfen aufweist, wobei die Führungshilfen am Messkontakt angeordnet sind und der Messkontakt entlang der Bohrung relativ zur Platine durch die Führungshilfen fixiert ist. Dies ermöglicht eine vorteilhaft einfache Montage. Beim Einschieben der Platine mit dem darauf durch den Magneten und den weiteren Magneten fixierten Messkontakt zieht der Magnet den Messkontakt an die Bohrungswand. Die Führungshilfen greifen nun beim Einschieben in die Eingriffe der Platine. Damit wird beim Voranschieben der Platine der Messkontakt mitverschoben.

Gemäß einer weiteren bevorzugten Ausführungsform der vorliegenden Erfindung ist vorgesehen, dass in den zweiten Verschluss ein Abschlusselement eingegossen ist, wobei das Abschlusselement vorzugsweise mit der Platine elektrisch kontaktiert ist. Dies ermöglicht, eine stirnseitige Vorrichtung in Form des Abschlusselementes anzubringen. Denkbar ist beispielsweise, dass das Abschlusselement einen Polschuh zur elektromagnetischen Wechselwirkung mit außerhalb des Wälzkörpers befindlichen Elementen umfasst

Denkbar ist aber auch, dass in den Verschluss ein Abschlusselement eingegossen ist, wobei das Abschlusselement vorzugsweise mit der Platine elektrisch kontaktiert ist. Dies ermöglicht ebenfalls, eine stirnseitige Vorrichtung in Form des Abschlusselementes anzubringen. Denkbar ist beispielsweise, dass das Abschlusselement einen Polschuh zur elektromagnetischen Wechselwirkung mit außerhalb des Wälzkörpers befindlichen Elementen

Ein weiterer Gegenstand der vorliegenden Erfindung ist ein Verfahren zur Herstellung eines Wälzkörpers, wobei in einem ersten Schritt eine Bohrung entlang der Mittelachse des Wälzkörpers erstellt wird, in einem zweiten Schritt eine Patine in die Bohrung eingeschoben wird, in einem dritten Schritt die Bohrung an einer ersten Stirnseite des Wälzkörpers mit einem Verschluss verschlossen und dabei die Platine in der Bohrung fixiert wird. Das erfindungsgemäße Verfahren ist einfach in der Durchführung und spart damit Zeit und Kosten bei der Herstellung der Wälzkörper. Zudem ist durch die Fixierung der Platine am Verschluss an der ersten Stirnseite des Wälzkörpers keine Fixierung an der Bohrungswand nötig, wodurch eine durch Verformungen der Bohrungswand entstehende Belastung und eine dadurch entstehende Ermüdung des Materials der Platine verringert wird. Denkbar ist, dass die Bohrung mit dem Verschluss an der ersten Stirnseite zumindest teilweise, vorzugsweise jedoch vollständig verschlossen wird. Dadurch ist gewährleistet, dass keine Substanzen, wie beispielsweise Schmiermittel, an der ersten Stirnseite in die Bohrung eindringen können. Vorzugsweise wird der Verschluss so bearbeitet, dass der Verschluss bündig mit der ersten Stirnseite abschließt. Dadurch weist der erfindungsgemäße Wälzkörper an der ersten Stirnseite die gleiche räumliche Form auf wie herkömmliche Wälzkörper. Denkbar ist dazu, dass der Verschluss gefräst, gefeilt, gehobelt, gedreht und/oder poliert wird.

Gemäß einer weiteren bevorzugten Ausführungsform der vorliegenden Erfindung ist vorgesehen, dass im dritten Schritt der Verschluss gegossen wird, wobei die Platine teilweise eingegossen wird, wobei der Verschluss vorzugsweise aus einem Epoxidharz gegossen wird, wobei vorzugsweise vor dem Gießen des Verschlusses eine Schutzschicht auf zumindest Teile der Platine aufgebracht wird. Das Verfahren vereinfacht sich dadurch deutlich. Denkbar ist, dass im Bereich der ersten Stirnseite des Wälzkörpers die Platine zumindest teilweise mit Epoxidharz umgossen wird. Die Schutzschicht schützt die Platine vor chemischen Einflüssen durch den Epoxidharzpfropfen. Denkbar ist, dass die Schutzschicht aus einem Silikon besteht. Zudem ist denkbar, dass die Schutzschicht so konfiguriert wird, dass diese mechanische Einflüsse, wie beispielsweise Schwingungen, dämpfen kann.

Gemäß einer weiteren bevorzugten Ausführungsform der vorliegenden Erfindung ist vorgesehen, dass im dritten Schritt die Bohrung an einer zweiten Stirnseite des Wälzkörpers mit einem zweiten Verschluss verschlossen und dabei die Platine in der Bohrung fixiert wird, wobei vorzugsweise der zweite Verschluss gegossen wird, wobei die Platine teilweise eingegossen wird, wobei der zweite Verschluss besonders bevorzugt aus einem zweiten Epoxidharz gegossen wird, wobei vorzugsweise vor dem Gießen des zweiten Verschlusses eine zweite Schutzschicht auf zumindest Teile der Platine aufgebracht wird. Dies ermöglicht das noch stabilere Fixieren der Platine an zwei Punkten bei gleichzeitig einfacher Montage. Denkbar ist, dass die Bohrung mit dem zweiten Verschluss an der zweiten Stirnseite zumindest teilweise, vorzugsweise jedoch vollständig verschlossen wird. Dadurch ist gewährleistet, dass keine Substanzen, wie beispielsweise Schmiermittel, an der zweiten Stirnseite in die Bohrung eindringen können. Vorzugsweise wird der zweite Verschluss so bearbeitet, dass der zweite Verschluss bündig mit der zweiten Stirnseite abschließt. Dadurch weist der erfindungsgemäße Wälzkörper an der zweiten Stirnseite die gleiche räumliche Form auf wie herkömmliche Wälzkörper. Denkbar ist dazu, dass der zweite Verschluss gefräst, gefeilt, gehobelt und/oder poliert wird.

Gemäß einer weiteren bevorzugten Ausführungsform der vorliegenden Erfindung ist vorgesehen, dass im dritten Schritt an der zweiten Stirnseite ein Abschlusselement eingegossen wird, wobei das Abschlusselement vorzugsweise vor dem Eingießen mit der Platine elektrisch kontaktiert wird. Dies ermöglicht, eine stirnseitige Vorrichtung in Form des Abschlusselementes anzubringen. Denkbar ist beispielsweise, dass als Abschlusselement ein Polschuh zur elektromagnetischen Wechselwirkung mit außerhalb des Wälzkörpers befindlichen Elementen eingegossen wird. Denkbar ist aber beispielsweise auch eine Vorrichtung zur Detektion der Position des Wälzkörpers im Wälzlager eingegossen wird. Dazu ist denkbar, dass Abschlusselement einen Sensor und eine weitere Platine aufweist.

Gemäß der vorliegenden Erfindung ist vorgesehen, dass vor dem zweiten Schritt ein Messkontakt auf der Platine so angeordnet wird, dass am Messkontakt angeordnete Führungshilfen in Eingriffe der Platine greifen, wobei der Messkontakt von einem Magneten an der Platine fixiert wird, wobei beim Einschieben der Platine im zweiten Schritt der Messkontakt von dem Magneten von der Platine weg gegen die Bohrungswand gezogen wird, wobei der Messkontakt bei Einschieben entlang der Bohrung relativ zur Platine von den Führungshilfen fixiert wird. Die Fixierung des Messkontaktes an der Bohrungswand mittels des Magneten ist einfach, günstig und sehr zuverlässig. Zur Fixierung des Messkontaktes müssen keine Änderungen an der Bohrungswand durchgeführt werden. Weiterhin ist durch die Fixierung entlang der Bohrung relativ zur Platine beim Einschieben eine vorteilhaft einfache Montage ermöglicht. Beim Einschieben der Platine mit dem darauf durch den Magneten fixierten Messkontakt wechselwirkt der Magnet mit dem Metall des Wälzkörpers und zieht den Messkontakt an die Bohrungswand. Die Führungshilfen greifen nun beim Einschieben in die Eingriffe der Platine. Damit wird beim Voranschieben der Platine der Messkontakt mitverschoben.

Dazu ist vorzugsweise vorgesehen, dass der Messkontakt vor dem Einschieben der Platine dadurch von dem Magneten an der Platine fixiert wird, dass der Magnet von einem auf der dem Magneten gegenüberliegenden Seite der Platine angeordneten weiteren Magneten magnetisch angezogen wird. Denkbar dazu ist, dass der weitere Magnet in einem an der Platine fixierten Abstandshalter angeordnet ist.

Gemäß einer weiteren bevorzugten Ausführungsform der vorliegenden Erfindung ist vorgesehen, dass die Platine nach dem Einschieben von dem weiteren Magneten an der Bohrungswand fixiert wird. Die Fixierung der Platine an der Bohrungswand mittels des weiteren Magneten ist einfach, günstig und sehr zuverlässig. Zur Fixierung der Platine müssen keine Änderungen an der Bohrungswand durchgeführt werden.

Ein weiterer Gegenstand der vorliegenden Erfindung ist ein Wälzlager, insbesondere ein Großwälzlager, mit einem ersten Lagerring und einem um eine Drehachse drehbaren, und insbesondere konzentrisch zu dem ersten Lagerring angeordneten zweiten Lagerring, sowie einer Vielzahl von zwischen dem ersten Lagerring und dem zweiten Lagerring angeordneten Wälzkörpern, wobei wenigstens ein Wälzkörper ein erfindungsgemäßer Wälzkörper ist. Vorzugsweise ist der erste Lagerring ein Außenring und/oder der zweite Lagerring ein Innenring. Hierdurch ist es vorteilhaft möglich, ein Wälzlager bereitzustellen

Alle vorstehenden Ausführungen unter "Offenbarung der Erfindung" gelten gleichermaßen für den erfindungsgemäßen Wälzkörper, das erfindungsgemäße Wälzlager und das erfindungsgemäße Verfahren.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung.

### Kurze Beschreibung der Zeichnungen

- **Figur 1**: zeigt einen schematischen Längsschnitt eines Wälzkörpers gemäß einer beispielhaften Ausführungsform der vorliegenden Erfindung.
- **Figur 2**: zeigt einen schematischen Längsschnitt eines Teils eines Wälzkörpers gemäß einer beispielhaften Ausführungsform der vorliegenden Erfindung.
- **Figur 3**: zeigt eine schematische Darstellung eines Wälzlagers gemäß einer beispielhaften Ausführungsform der vorliegenden Erfindung.
- **Figur 4**: zeigt eine schematische Schnittdarstellung einer Platine eines Wälzkörpers gemäß einer beispielhaften Ausführungsform der vorliegenden Erfindung.
- **Figur 5**: zeigt eine schematische Darstellung einer Platine eines Wälzkörpers gemäß einer beispielhaften Ausführungsform der vorliegenden Erfindung.
- **Figur 6**: zeigt eine schematische Darstellung eines Wälzkörpers gemäß einer beispielhaften Ausführungsform der vorliegenden Erfindung.
- **Figuren 7 a und b**: zeigen eine schematische Darstellung der Platine und eine schematische Darstellung des Wälzkörpers mit der Platine, dem Messkontakt und dem Abstandshalter gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

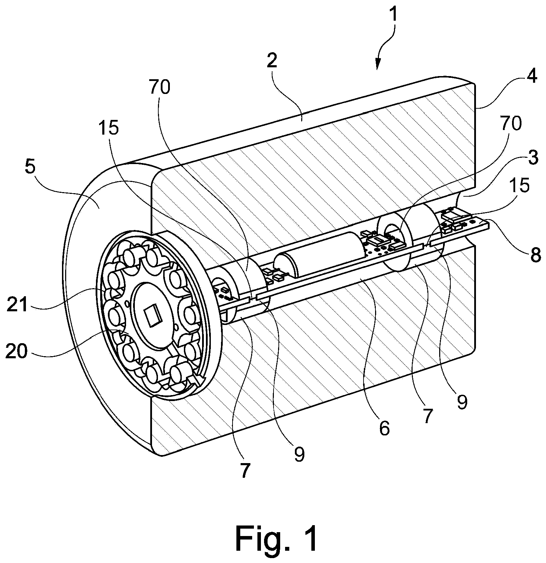

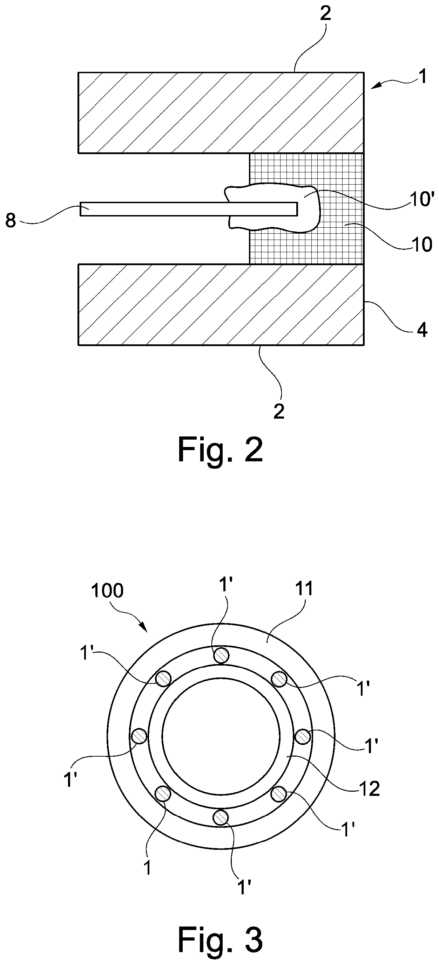

In **Figur 1** ist eine schematische Ansicht eines Wälzkörpers 1 gemäß einer beispielhaften Ausführungsform der vorliegenden Erfindung dargestellt. Ein derartiger Wälzkörper 1 wird in Wälzlagern eingesetzt und dient der beweglichen Führung eines ersten Lagerrings 11 und eines zweiten Lagerrings 12 zueinander, insbesondere eines in einem drehfest angeordneten Außenring 11 angeordneten Innenrings 12 (siehe Figur 3). Dabei sind üblicherweise zwischen Außenring 11 und Innenring 12 eine Vielzahl von Wälzkörpern vorgesehen, die auf Laufflächen des Außenrings 11 und des Innenrings 12 abrollen.

Der Wälzkörper 1 umfasst hier einen zylindrischen oder im Wesentlichen kegelförmigen Körper mit einem Außenmantel 2 der als Lauffläche dient und auf der der Außenring 11 und der Innenring 12 abrollen. Der Wälzkörper 1 weist in seiner Mitte eine Bohrung 3 auf, die konzentrisch um die Mittelachse des Wälzkörpers 1 herum ausgebildet ist. Die Bohrung 3 ist durch die entlang der Mittelachse des Wälzkörpers 1 angeordneten Platine 8 in zwei Halbräume geteilt. An der zweiten Stirnseite 5 ist das Anschlusselement 21 angeordnet. Das Anschlusselement 21 ist hier als Polschuh ausgeführt, welcher in elektromagnetische Wechselwirkung mit Elementen außerhalb des Wälzkörpers tritt (nicht dargestellt). Das Anschlusselement 21 ist in den zweiten Verschluss 20 eingegossen, welcher ein Epoxidharzpfropfen ist und die Bohrung 3 an der zweiten Stirnseite verschließt. Ein kleiner Bereich der Platine 8 an dem der zweiten Stirnseite 5 zugewandten Ende der Platine 8 ist in den zweiten Verschluss 20 eingegossen (hier nicht zu sehen). An der ersten Stirnseite 4 ist die Bohrung 3 von dem hier nicht dargestellten Verschluss 10 verschlossen. Auch hier ist ein kleiner Bereich der Platine 8 in den Verschluss 10, welcher ebenfalls ein Epoxidharzpfropfen ist, eingegossen. An der Bohrungswand 6 angeordnet sind hier zwei Messkontakte 7 zu erkennen. Die Messkontakte 7 sind mit Magneten (nicht dargestellt) an der Bohrungswand fixiert. Bei der Herstellung des Wälzkörpers 1 wird die Platine 8 in die Bohrung 3 eingeschoben. Dabei drücken die Magnete die Messkontakte 7 an die Bohrungswand 6. Damit die Messkotakte 7 ihre Position entlang der Bohrung 3 relativ zur Platine 8 beibehalten und mit der Platine 8 verschoben werden, greifen die an den Messkontakten 7 angeordneten Führungshilfen 9 in Eingriffe 15 der Platine 8. Die Eingriffe 15 sind hier Aussparungen in der Platine 8. Die Platine 8 weist ferner die Abstandshalter 70 auf, welche an der Bohrungswand mittels weiterer Magnete (hier nicht dargestellt) fixiert sind.

In **Figur 2** ist ein schematischer Längsschnitt eines Teils eines Wälzkörpers 1 gemäß einer beispielhaften Ausführungsform der vorliegenden Erfindung dargestellt. Zu erkennen ist der Teil der Platine 8, welcher der ersten Stirnseite 4 des Wälzkörpers 1 zugewandt angeordnet ist. Ein kleiner Teil der Platine 8 ist von dem Verschluss 10 umgeben. Der Verschluss 10 ist ein Epoxidharzpfropfen. In diesen ist der kleine Teil der Platine 8 eingegossen. Zwischen Platine 8 und Verschluss 10 ist die Schutzschicht 10' aus Silikon angeordnet. Der Verschluss 10 schließt mit der ersten Stirnseite 4 bündig ab. Dazu ist der Verschluss 10 nach dem Gießen mechanisch nachbearbeitet.

Die Verschlüsse 10, 20 verhindern das Eindringen von Stoffen wie zum Beispiels Schmiermittel in die Bohrung 3. Damit wird auch verhindert, dass Messungen von Verformungen des Wälzkörpers 1 durch in die Bohrung 3 eingedrungene Stoffe wie zum Beispiel Schmiermittel beeinträchtig, verfälscht oder verunmöglicht werden.

In **Figur 3** ist eine schematische Darstellung eines Wälzlagers 100 gemäß einer beispielhaften Ausführungsform der vorliegenden Erfindung gezeigt. Das Wälzlager 100 weist zwischen dem ersten Lagerring 11 und dem zweiten Lagerring 12 einen erfindungsgemäßen Wälzkörper 1 und eine Vielzahl herkömmlicher Wälzkörper 1' auf.

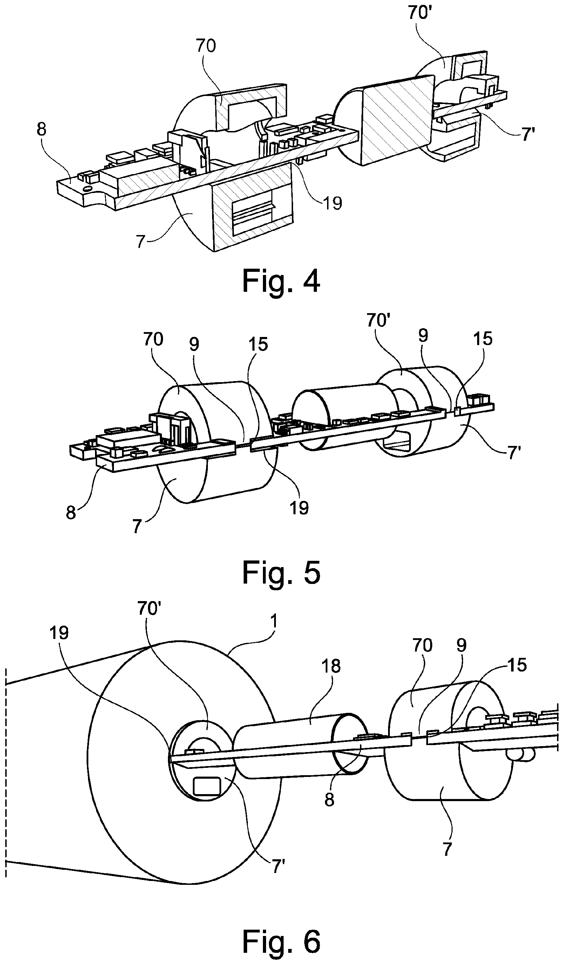

In **Figur 4** ist eine schematische Schnittdarstellung einer Platine 8 eines Wälzkörpers gemäß einer beispielhaften Ausführungsform der vorliegenden Erfindung gezeigt. Zu erkennen sind neben der Platine 8 die Messkontakte 7, 7', die Abstandshalter 70, 70' und ein Spalt 19 zwischen der Platine 8 und dem Messkontakt 7. Der Messkontakt 7 liegt mit seiner abgerundeten Seite an der Bohrungswand an (hier nicht dargestellt).

In **Figur 5** ist eine Darstellung einer Platine 8 eines Wälzkörpers gemäß einer beispielhaften Ausführungsform der vorliegenden Erfindung gezeigt. Zu erkennen sind die gleichen Merkmale wie sie in Figur 4 gezeigt wird, weshalb diese an dieser Stelle nicht weiter diskutiert werden. Am linken Messkontakt 7 ist im Gegensatz zum rechten Messkontakt 7' der Spalt 19 zu sehen. Dies ist der Tatsache geschuldet, dass der linke Messkontakt 7 in einem in den Wälzkörper eingebauten Zustand gezeichnet ist und der rechte Messkontakt 7' in einem nicht in den Wälzkörper eingebauten Zustand gezeichnet ist (siehe Figur 6). Im eingebauten Zustand liegt der Messkontakt 7 an der Bohrungswand an und ist zur Platine 8 mit dem Spalt 19 beabstandet, und der Abstandshalter 70, der mit der Platine 8 verbunden ist, liegt ebenfalls an der Bohrungswand an. Im nicht eingebauten Zustand liegt der Messkontakt 7' nicht an der Bohrungswand, sondern an der Platine 8 an. Auch der Abstandshalter 70' liegt nicht an der Bohrungswand an. Zu erkennen sind weiterhin die Eingriffe 15 an der Platine 8 und die Führungshilfen 9 an den Messkontakten 7, 7' sowie die Abstandshalter 70, 70'.

In **Figur 6** ist eine Darstellung einer Platine 8 und eines Wälzkörpers 1 gemäß einer beispielhaften Ausführungsform der vorliegenden Erfindung gezeigt. Dargestellt ist das Einführen der Platine 8 mit den Messkontakten 7 und 7' und den Abstandshaltern 70 und 70' in die Bohrung des Wälzkörpers 1 bei der Herstellung des Wälzkörpers 1. Der linke Messkontakt 7' ist bereits in den Wälzkörper 1 eingeführt. Der linke Messkontakt 7' wird von einem Magneten (hier nicht dargestellt) an die Bohrungswand gezogen. Weiterhin wird der linke Abstandshalter 70', welcher an der Platine 8 fixiert ist, von einem weiteren Magneten (hier nicht dargestellt) an die Bohrungswand gezogen. Dadurch ist der Spalt 19 zwischen dem linken Messkontakt 7' und der Platine 8 gebildet. Beim weiteren Einschieben der Platine 8 in den Wälzkörper 1 greift die Führungshilfe 9 am linken Messkontakt 7' (hier vom Wälzkörper 1 verdeckt) in den Eingriff 15 der Platine 8 im Bereich des linken Messkontaktes 7' (der Eingriff ist hier ebenfalls vom Wälzkörper 1 verdeckt). Durch einen Formschluss der Führungshilfe 9 mit dem Eingriff 15 wird der linke Messkontakt 7' zusammen mit der Platine 8 weiter in den Wälzkörper 1 geschoben. Zu erkennen ist weiterhin ein rechter Messkontakt 7. Der rechte Messkontakt 7 ist noch nicht in die Bohrung des Wälzkörpers 1 eingeführt und damit noch nicht in Kontakt mit der Bohrungswand. Der Magnet im rechten Messkontakt 7 wechselwirkt magnetisch mit dem weiteren Magneten im rechten Abstandshalter 70. Der Magnet und der weitere Magnet ziehen sich an. Dadurch wird der rechte Messkontakt 7 an der Platine 8 fixiert und es entsteht an dieser Stelle kein Spalt. Wird die Platine 8 so weit in den Wälzkörper 1 eingeschoben, dass der rechte Messkontakt 7 in den Bereich der Bohrung kommt, so werden der rechte Messkontakt 7 wie der linke Messkontakt 7' von dem Magneten und ebenso der rechte Abstandshalter 70 wie der linke Abstandshalter 70' von dem weiteren Magneten an die Bohrungswand gezogen. Ist der rechte Messkontakt 7' in Kontakt mit der Bohrungswand, so kann er durch einen Formschluss von der hier gezeigten Führungshilfe 9 und dem hier gezeigten Eingriff 15 zusammen mit der Platine 8 weiter in den Wälzkörper 1 eingeschoben werden.

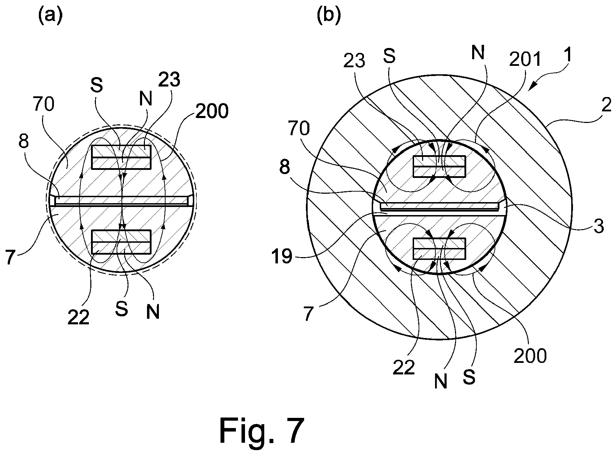

**Figur 7 (a)** zeigt eine schematische Darstellung der Platine 8 mit dem Messkontakt 7 und dem Abstandshalter 70 in einem Zustand, in dem die Platine 8 nicht in einen Wälzkörper eingeschoben ist. Der Magnet 22 im Inneren des Messkontaktes 7 und der weitere Magnet im Inneren des Abstandshalters 70 ziehen sich gegenseitig über eine magnetische Wechselwirkung an. Dargestellt ist dies hier durch die magnetischen Feldlinien 200. Die gegenseitige Anziehung des Magneten 22 und des weiteren Magneten 23 bewirkt, dass der Messkontakt 7 auf der Platine 8 fixiert ist.

**Figur 7 (b)** zeigt eine schematische Darstellung eines Wälzkörpers 1 gemäß einer beispielhaften Ausführungsform der vorliegenden Erfindung. Zu sehen ist ein Schnitt entlang einer Ebene, welche orthogonal auf der Mittelachse des Wälzkörpers 1 steht. In dem Wälzkörper 1 mit dem Außenmantel 2 ist in der Bohrung 3 die Platine 8 angeordnet. Die Platine 8 steht über den Abstandshalter 70 in mechanischem Kontakt mit der Bohrungswand. Der Abstandshalter 70 ist hier, anders als in Figur 7(a) gezeigt, mit dem weiteren Magneten 23 an der Bohrungswand fixiert. Die magnetische Wechselwirkung zwischen Bohrungswand und weiteren Magneten 23 ist durch die magnetischen Feldlinien 201 verdeutlicht.

Weiterhin ist der Messkontakt 7 zu erkennen, welcher seinerseits mit dem Magneten 22 an der Bohrungswand fixiert ist. Die magnetische Wechselwirkung zwischen Bohrungswand und Magnet 22 ist ebenfalls durch die magnetischen Feldlinien 200 verdeutlicht.

Dadurch, dass der Abstand zwischen dem Magneten 22 und der Bohrungswand sowie der Abstand zwischen dem weiteren Magneten 23 und der Bohrungswand geringer ist als der Abstand zwischen dem Magneten 22 und dem weiteren Magneten 23, ist die ferromagnetische Wechselwirkung zwischen dem Magneten 22 beziehungsweise dem weiteren Magneten 23 und dem metallischen Material des Wälzkörpers stärker, als die Wechselwirkung zwischen dem Magneten 22 und dem weiteren Magneten 23. Somit verliert der Messkontakt 7 den mechanischen Kontakt zur Platine 8 beim Einführen in den Wälzkörper 1 und Platine 8 und Messkontakt 7 sind in der Bohrung 3 des Wälzkörpers 1 voneinander beabstandet. Zwischen der Platine 8 und dem Messkontakt 7 ist dann ein Spalt 19 vorhanden, dessen Größe durch Verformungen des Wälzkörpers 1 verändert wird. Durch die Messung von Änderungen des Spaltes 19 können dann die Belastungen bestimmt werden, denen der Wälzkörper 1 ausgesetzt ist.

### Bezugszeichenliste

- 1: Wälzkörper
- 1': Wälzkörper
- 2: Außenmantel
- 3: Bohrung
- 4: erste Stirnseite
- 5: zweite Stirnseite
- 6: Bohrungswand
- 7, 7': Messkontakt
- 8: Platine
- 9: Führungshilfe
- 10: Verschluss
- 10': Schutzschicht
- 11: erster Lagerring
- 12: zweiter Lagerring
- 13: Käfig
- 15: Eingriff
- 19: Spalt
- 20: zweiter Verschluss
- 21: Abschlusselement
- 22: Magnet
- 23: weiterer Magnet
- 70, 70': Abstandshalter
- 100: Wälzlager
- 200: magnetische Feldlinien
- 201: magnetische Feldlinien

## Patentansprüche

1. Wälzkörper (1) zur Verwendung in einem Wälzlager (100) mit einem Außenmantel (2), einer ersten Stirnseite (4), einer zweiten Stirnseite (5) und einer Bohrung (3), wobei die Bohrung (3) entlang einer Mittelachse des Wälzkörpers (1) vorgesehen ist, der Wälzkörper (1) eine in der Bohrung (3) im Wesentlichen parallel zu der Mittelachse des Wälzkörpers (1) angeordnete Platine (8) aufweist, die Bohrung (3) an der ersten Stirnseite (4) mit einem Verschluss (10) verschlossen ist, und die Platine (8) von dem Verschluss (10) fixiert ist, **dadurch gekennzeichnet, dass** der Wälzkörper (1) einen in der Bohrung (3) angeordneten Messkontakt (7) aufweist, wobei der Messkontakt (7) an der Bohrungswand (6) angeordnet ist und mit einem Magneten (22) magnetisch an der Bohrungswand (6) fixiert ist.

2. Wälzkörper (1) nach Anspruch 1, wobei die Platine (8) zur Bohrungswand (6) beabstandet ist.

3. Wälzkörper (1) nach einem der vorhergehenden Ansprüche, wobei die Bohrung (3) an der zweiten Stirnseite (5) mit einem zweiten Verschluss (20) verschlossen ist, wobei vorzugsweise die Platine (8) von dem zweiten Verschluss (20) fixiert ist.

4. Wälzkörper (1) nach einem der vorhergehenden Ansprüche, wobei zwischen dem Verschluss (10) und der Platine (8) eine Schutzschicht (10') angeordnet ist, wobei die Schutzschicht (10) vorzugsweise aus Silikon besteht.

5. Wälzkörper (1) nach einem der vorhergehenden Ansprüche, wobei der Wälzkörper (1) einen an der Platine (8) angeordneten Abstandshalter (70) aufweist, wobei die Bohrung (3) von der Platine (8) in einen ersten Halbraum und einen zweiten Halbraum geteilt ist, wobei der Messkontakt (7) im ersten Halbraum angeordnet ist, wobei der Abstandshalter (70) im zweiten Halbraum angeordnet ist, wobei der Abstandshalter (70) auf einer dem Messkontakt (7) gegenüberliegenden Position der Platine (8) angeordnet ist, wobei der Abstandshalter (70) mit seiner der Platine (8) abgewandten Seite an der Bohrungswand (6) angeordnet ist, wobei der Abstandshalter (70) an der Platine (8) fixiert ist, wobei der Abstandshalter (70) vorzugsweise mit der Platine (8) verklebt und/oder verschraubt und/oder verklipst ist.

6. Wälzkörper (1) nach Anspruch 5, wobei der Abstandshalter (70) mit einem weiteren Magneten (23) magnetisch an der Bohrungswand (6) fixiert ist.

7. Wälzkörper (1) nach einem der vorhergehenden Ansprüche, wobei der Messkontakt (7) zur Platine (8) beabstandet ist.

8. Wälzkörper (1) nach einem der vorhergehenden Ansprüche, wobei die Platine (8) Eingriffe (15) zur Aufnahme von Führungshilfen (9) aufweist, wobei die Führungshilfen (9) am Messkontakt (7) angeordnet sind und der Messkontakt (7) entlang der Bohrung (3) relativ zu Platine (8) durch die Führungshilfen (9) fixiert ist.

9. Verfahren zur Herstellung eines Wälzkörpers (1), wobei in einem ersten Schritt eine Bohrung (3) entlang der Mittelachse des Wälzkörpers (1) erstellt wird,
in einem zweiten Schritt eine Patine (8) in die Bohrung (3) eingeschoben wird,
in einem dritten Schritt die Bohrung (3) an einer ersten Stirnseite (4) des Wälzkörpers (1) mit einem Verschluss (10) verschlossen und dabei die Platine (8) in der Bohrung (3) fixiert wird, **dadurch gekennzeichnet, dass**
vor dem zweiten Schritt ein Messkontakt (7) auf der Platine (8) so angeordnet wird, dass am Messkontakt (7) angeordnete Führungshilfen (9) in Eingriffe (15) der Platine (8) greifen, wobei der Messkontakt (7) von einem Magneten (22) an der Platine (8) fixiert wird,
wobei beim Einschieben der Platine (8) im zweiten Schritt der Messkontakt (7) von dem Magneten (22) von der Platine (8) weg gegen die Bohrungswand (6) gezogen wird,
wobei der Messkontakt (7) beim Einschieben entlang der Bohrungswand (6) relativ zur Platine (8) von den Führungshilfen (9) fixiert wird.

10. Verfahren nach Anspruch 9, wobei im dritten Schritt der Verschluss (10) gegossen wird, wobei die Platine (8) teilweise eingegossen wird, wobei der Verschluss (10) vorzugsweise aus einem Epoxidharz gegossen wird, wobei vorzugsweise vor dem Gießen des Verschlusses (10) eine Schutzschicht (10') auf zumindest Teile der Platine (8) aufgebracht wird.

11. Verfahren nach einem Ansprüche 9 bis 10, wobei im dritten Schritt die Bohrung (3) an einer zweiten Stirnseite (5) des Wälzkörpers (1) mit einem zweiten Verschluss (20) verschlossen und dabei die Platine (8) in der Bohrung (3) fixiert wird, wobei vorzugsweise der zweite Verschluss (20) gegossen wird, wobei die Platine (8) teilweise eingegossen wird, wobei der zweite Verschluss (20) besonders bevorzugt aus einem zweiten Epoxidharz gegossen wird, wobei vorzugsweise vor dem Gießen des zweiten Verschlusses (20) eine zweite Schutzschicht auf zumindest Teile der Platine (8) aufgebracht wird.

12. Verfahren nach Anspruch 11, wobei im dritten Schritt an der zweiten Stirnseite (5) ein Abschlusselement (21) eingegossen wird, wobei das Abschlusselement (21) vorzugsweise vor dem Eingießen mit der Platine (8) elektrisch kontaktiert wird.

13. Verfahren nach einem der Ansprüche 9 bis 12, wobei der Messkontakt (7) vor dem Einschieben der Platine (8) dadurch von dem Magneten (22) an der Platine (8) fixiert wird, dass der Magnet (22) von einem auf der dem Magneten (22) gegenüberliegenden Seite der Platine (8) angeordneten weiteren Magneten (23) magnetisch angezogen wird.

14. Verfahren nach Anspruch 13, wobei die Platine (8) nach dem Einschieben von dem weiteren Magneten (23) an der Bohrungswand (6) fixiert wird.

15. Wälzlager (100), insbesondere Großwälzlager, mit einem ersten Lagerring (11) und einem um eine Drehachse drehbaren, und insbesondere konzentrisch zu dem ersten Lagerring (11) angeordneten zweiten Lagerring (12), sowie einer Vielzahl von zwischen dem ersten Lagerring (11) und dem zweiten Lagerring (12) angeordneten Wälzkörpern (1'), **dadurch gekennzeichnet, dass** wenigstens ein Wälzkörper (1') ein Wälzkörper (1) gemäß einem der Ansprüche 1 bis 8 ist.

## Claims

1. Rolling body (1) for use in a roller bearing (100), having an outer shell (2), a first end side (4), a second end side (5), and a bore (3), wherein
the bore (3) is provided along a central axis of the rolling body (1), the rolling body (1) has a circuit board (8) which in the bore (3) is disposed so as to be substantially parallel to the central axis of the rolling body (1), the bore (3) on the first end side (4) is closed with a closure (10) and the circuit board (8) is fixed by the closure (10), **characterized in that**
the rolling body (1) has a measuring contact (7) disposed in the bore (3), wherein the measuring contact (7) is disposed on the bore wall (6) and by way of a magnet (22) is magnetically fixed to the bore wall (6).

2. Rolling body (1) according to Claim 1, wherein the circuit board (8) is spaced apart from the bore wall (6) .

3. Rolling body (1) according to one of the preceding claims, wherein the bore (3) on the second end side (5) is closed with a second closure (20), wherein the circuit board (8) is preferably fixed by the second closure (20).

4. Rolling body (1) according to one of the preceding claims, wherein a protective layer (10') is disposed between the closure (10) and the circuit board (8), wherein the protective layer (10) is preferably composed of silicone.

5. Rolling body (1) according to one of the preceding claims, wherein the rolling body (1) has a spacer (70) disposed on the circuit board (8), wherein the bore (3) is divided by the circuit board (8) into a first semi-chamber and a second semi-chamber, wherein the measuring contact (7) is disposed in the first semi-chamber, wherein the spacer (70) is disposed in the second semi-chamber, wherein the spacer (70) is disposed on a position of the circuit board (8) that lies opposite the measuring contact (7), wherein the spacer (70) by way of the side thereof that faces away from the circuit board (8) is disposed on the bore wall (6), wherein the spacer (70) is fixed to the circuit board (8), wherein the spacer (70) is preferably adhesively bonded and/or screwed and/or snap-fitted to the circuit board (8).

6. Rolling body (1) according to Claim 5, wherein the spacer (70) by way of a further magnet (23) is magnetically fixed to the bore wall (6).

7. Rolling body (1) according to one of the preceding claims, wherein the measuring contact (7) is spaced apart from the circuit board (8).

8. Rolling body (1) according to one of the preceding claims, wherein the circuit board (8) has engagements (15) for receiving guiding aids (9), wherein the guiding aids (9) are disposed on the measuring contact (7) and the measuring contact (7) along the bore (3) is fixed relative to the circuit board (8) by the guiding aids (9).

9. Method for producing a rolling body (1), wherein in a first step a bore (3) is established along the central axis of the rolling body (1),
in a second step a circuit board (8) is inserted into the bore (3);
in a third step the bore (3) on a first end side (4) of the rolling body (1) is closed with a closure (10) and the circuit board (8) is fixed in the bore (3), **characterized in that**
prior to the second step a measuring contact (7) is disposed on the circuit board (8) in such a manner that guiding aids (9) disposed on the measuring contact (7) engage in engagements (15) of the circuit board (8), wherein the measuring contact (7) is fixed to the circuit board (8) by a magnet (22), wherein when inserting the circuit board (8) in the second step the measuring contact (7) by means of the magnet (22) is pulled away from the circuit board (8) towards the bore wall (6),
wherein the measuring contact (7) during insertion along the bore wall (6) is fixed relative to the circuit board (8) by the guiding aids (9).

10. Method according to Claim 9, wherein in the third step the closure (10) is cast, wherein the circuit board (8) is partially cast therein, wherein the closure (10) is preferably cast from an epoxy resin, wherein, preferably prior to casting the closure (10), a protective layer (10') is applied to at least parts of the circuit board (8).

11. Method according to one of Claims 9 to 10, wherein in the third step the bore (3) on a second end side (5) of the rolling body (1) is closed with a second closure (20) and the circuit board (8) is fixed in the bore (3), wherein the second closure (20) is preferably cast, wherein the circuit board (8) is partially cast therein, wherein the second closure (20) particularly preferably is cast from a second epoxy resin, wherein, preferably prior to casting the second closure (20), a second protective layer is applied to at least parts of the circuit board (8) .

12. Method according to Claim 11, wherein in the third step an end plate element (21) is cast on the second end side (5),
wherein the end plate element (21) and the circuit board (8) are preferably electrically contacted prior to the casting.

13. Method according to one of Claims 9 to 12, wherein the measuring contact (7) prior to inserting the circuit board (8) is fixed to the circuit board (8) by the magnet (22) in that the magnet (22) is magnetically attracted by a further magnet (23) disposed on a side of the circuit board (8) that is opposite the magnet (22).

14. Method according to Claim 13, wherein the circuit board (8) upon insertion is fixed to the bore wall (6) by the further magnet (23).

15. Roller bearing (100), in particular a large-diameter roller bearing, having a first bearing ring (11) and a second bearing ring (12) which is rotatable about a rotation axis and in particular disposed so as to be concentric with the first bearing ring (11), as well as a multiplicity of rolling bodies (1') disposed between the first bearing ring (11) and the second bearing ring (12), **characterized in that** at least one rolling body (1') is a rolling body (1) according to one of Claims 1 to 8.

## Revendications

1. Corps de roulement (1) destiné à être utilisé dans un palier à roulement (100), comportant une enveloppe extérieure (2), un premier côté frontal (4), un deuxième côté frontal (5) et un alésage (3), l'alésage (3) étant prévu le long d'un axe médian du corps de roulement (1), le corps de roulement (1) comprenant une carte de circuits imprimés (8) disposée sensiblement parallèlement à l'axe médian du corps de roulement (1) dans l'alésage (3), l'alésage (3) étant fermé par une fermeture (10) au niveau du premier côté frontal (4), et la carte de circuits imprimés (8) étant fixée par la fermeture (10), **caractérisé en ce que** le corps de roulement (1) comprend un contact de mesure (7) disposé dans l'alésage (3), le contact de mesure (7) étant disposé sur la paroi d'alésage (6) et étant fixé de manière magnétique à la paroi d'alésage (6) à l'aide d'un aimant (22).

2. Corps de roulement (1) selon la revendication 1, la carte de circuits imprimés (8) étant espacée par rapport à la paroi d'alésage (6).

3. Corps de roulement (1) selon l'une des revendications précédentes, l'alésage (3) étant fermé par une deuxième fermeture (20) au niveau du deuxième côté frontal (5), la carte de circuits imprimés (8) étant fixée de préférence par la deuxième fermeture (20).

4. Corps de roulement (1) selon l'une des revendications précédentes, une couche de protection (10') étant disposée entre la fermeture (10) et la carte de circuits imprimés (8), la couche de protection (10) étant de préférence constituée de silicone.

5. Corps de roulement (1) selon l'une des revendications précédentes, le corps de roulement (1) comprenant une pièce d'écartement (70) disposée sur la carte de circuits imprimés (8), l'alésage (3) étant divisé par la carte de circuits imprimés (8) en un premier demi-espace et un deuxième demi-espace, le contact de mesure (7) étant disposé dans le premier demi-espace, la pièce d'écartement (70) étant disposée dans le deuxième demi-espace, la pièce d'écartement (70) étant disposée à une position de la carte de circuits imprimés (8) opposée au contact de mesure (7), la pièce d'écartement (70) étant disposée sur la paroi d'alésage (6) par son côté opposé à la carte de circuits imprimés (8), la pièce d'écartement (70) étant fixée sur la carte de circuits imprimés (8), la pièce d'écartement (70) étant de préférence collée et/ou vissée et/ou enclipsée sur la carte de circuits imprimés (8).

6. Corps de roulement (1) selon la revendication 5, la pièce d'écartement (70) étant fixée de manière magnétique sur la paroi d'alésage (6) à l'aide d'un autre aimant (23) .

7. Corps de roulement (1) selon l'une des revendications précédentes, le contact de mesure (7) étant espacé par rapport à la carte de circuits imprimés (8) .

8. Corps de roulement (1) selon l'une des revendications précédentes, la carte de circuits imprimés (8) comprenant des éléments d'entrée en prise (15) pour la réception d'auxiliaires de guidage (9), les auxiliaires de guidage (9) étant disposés sur le contact de mesure (7) et le contact de mesure (7) étant fixé par le biais des auxiliaires de guidage (9) par rapport à la carte de circuits imprimés (8) le long de l'alésage (3).

9. Procédé de fabrication d'un corps de roulement (1), un alésage (3) étant produit le long de l'axe médian du corps de roulement (1) dans une première étape,
une carte de circuits imprimés (8) étant insérée dans l'alésage (3) dans une deuxième étape,
l'alésage (3) étant fermé par une fermeture (10) au niveau d'un premier côté frontal (4) du corps de roulement (1) et la carte de circuits imprimés (8) étant ainsi fixée dans l'alésage (3) dans une troisième étape, **caractérisé en ce**
**qu'**avant la deuxième étape, un contact de mesure (7) est disposé sur la carte de circuits imprimés (8) de telle sorte que des auxiliaires de guidage (9) disposés sur le contact de mesure (7) viennent en prise dans des éléments d'entrée en prise (15) de la carte de circuits imprimés (8), le contact de mesure (7) étant fixé sur la carte de circuits imprimés (8) par un aimant (22),
le contact de mesure (7) étant attiré contre la paroi d'alésage (6) par l'aimant (22) à l'écart de la carte de circuits imprimés (8) lors de l'insertion de la carte de circuits imprimés (8) dans la deuxième étape,
le contact de mesure (7) étant fixé par les auxiliaires de guidage (9) par rapport à la carte de circuits imprimés (8) le long de la paroi d'alésage (6) lors de l'insertion.

10. Procédé selon la revendication 9, la fermeture (10) étant coulée dans la troisième étape, la carte de circuits imprimés (8) étant partiellement coulée, la fermeture (10) étant de préférence coulée en une résine époxyde, une couche de protection (10') étant appliquée sur au moins des parties de la carte de circuits imprimés (8) de préférence avant la coulée de la fermeture (10).

11. Procédé selon l'une des revendications 9 et 10, l'alésage (3) étant fermé par une deuxième fermeture (20) au niveau d'un deuxième côté frontal (5) du corps de roulement (1) et la carte de circuits imprimés (8) étant ainsi fixée dans l'alésage (3) dans la troisième étape, la deuxième fermeture (20) étant de préférence coulée, la carte de circuits imprimés (8) étant partiellement coulée, la deuxième fermeture (20) étant de manière particulièrement préférée coulée en une deuxième résine époxyde, une deuxième couche de protection étant appliquée sur au moins des parties de la carte de circuits imprimés (8) de préférence avant la coulée de la deuxième fermeture (20).

12. Procédé selon la revendication 11, un élément de terminaison (21) étant coulé au niveau du deuxième côté frontal (5) dans la troisième étape, l'élément de terminaison (21) étant mis en contact électrique avec la carte de circuits imprimés (8) de préférence avant la coulée.

13. Procédé selon l'une des revendications 9 à 12, le contact de mesure (7) étant fixé par l'aimant (22) sur la carte de circuits imprimés (8) avant l'insertion de la carte de circuits imprimés (8), de telle sorte que l'aimant (22) soit attiré de manière magnétique par un autre aimant (23) disposé sur le côté de la carte de circuits imprimés (8) opposé à l'aimant (22).

14. Procédé selon la revendication 13, la carte de circuits imprimés (8) étant fixée à la paroi d'alésage (6) par l'autre aimant (23) après l'insertion.

15. Palier à roulement (100), en particulier grand palier à roulement, comportant une première bague de palier (11) et une deuxième bague de palier (12) pouvant tourner autour d'un axe de rotation et disposée en particulier de manière concentrique par rapport à la première bague de palier (11), ainsi qu'une pluralité de corps de roulement (1') disposés entre la première bague de palier (11) et la deuxième bague de palier (12), **caractérisé en ce qu'**au moins un corps de roulement (1') est un corps de roulement (1) selon l'une des revendications 1 à 8.
